# EUROPEAN PATENT SPECIFICATION

(11) **EP 3 376 147 B1**
(45) Date of publication and mention of the grant of the patent: **27.01.2021**
(21) Application number: 17461512.0
(22) Date of filing: 15.03.2017
(51) Int. Cl.: F28D 9/00, F28F 9/00, F02B 29/04, F28D 21/00

(54) **HEAT EXCHANGER ASSEMBLY**
WÄRMETAUSCHERANORDNUNG
ENSEMBLE ÉCHANGEUR THERMIQUE

(43) Date of publication of application: 19.09.2018
(73) Proprietor: VALEO AUTOSYSTEMY Sp. z o.o., 32-050 Skawina (PL)
(72) Inventor: Jonczyk, Radoslaw, 32-050 Skawina (PL); Klusek, Maciej, 32-050 Skawina (PL); Potok, Dariusz, 32-050 Skawina (PL); Szostek, Dawid, 32-050 Skawina (PL)
(74) Representative: Bialkowski, Adam

(56) References cited:
- WO-A1-2011/126449
- DE-A1- 2 903 543
- DE-A1- 4 313 505
- US-A1- 2011 168 370
- US-A1- 2014 299 295

## Description

### Technical Field

The present invention relates to a heat exchanger assembly, especially a water charge air cooler for a motor vehicle.

### Prior Art

A general structure of heat exchanger assemblies is known from the prior art, see e.g. US-A-20140299295 or US-A-20110168370 disclosing a water charge air cooler according to the preamble of claim 1. The prior art heat exchanger assembly comprises: a housing; a core situated in the housing and comprising a plurality of spaced-apart flow ducts, which in turn include two outermost flow ducts; two headers placed on the core at open ends of the flow ducts; and inlet and outlet conduits covering the headers and closing the housing. A through passage/space for the flow of a coolant exists between the housing and the outermost flow ducts. Moreover, a series of coolant turbulators can be provided between the flow ducts. Two additional coolant turbulators can be arranged between an inner wall of the housing and each of the outermost flow ducts, however these turbulators do not obstruct the flow of the coolant as there is always some passage for the coolant between inlet and outlet ports of the housing. All components of the assembly are connected to each other by brazing. In particular, the flow ducts are connected at their open ends to the headers.

In the prior art solution described above, when the temperature is changed, the outermost flow ducts expand in a different way compared to the housing. Both the flow ducts and the housing are connected to the headers and the outermost flow ducts are supported by the headers only at their ends. In this way the outermost flow ducts are subjected to high stresses. These stresses lead to cracking of the outermost flow ducts close to the junction between the header and the outermost flow ducts after a number of working cycles. This in turn results in undesired mixing of the coolant and a gas to be cooled down within the assembly.

The aim of the present invention is to eliminate the drawbacks of the prior art solutions described above, especially by increasing the fatigue strength of the heat exchanger assembly. This aim is achieved by a heat exchanger assembly as defined in the independent claim.

### Disclosure of the Invention

A heat exchanger assembly according to the present invention comprises: a housing and a core situated inside the housing, the core comprising a plurality of flow ducts, the flow ducts each comprising two wide sides, the flow ducts including two outermost flow ducts. The heat exchanger assembly further comprises at least one filler. The at least one filler is placed between and is in sealed contact with the housing and the wide side of at least one outermost flow duct so that the at least one filler covers at least 70% of the wide side of the at least one outermost flow duct, which is in contact with the at least one filler. The at least one filler is able to prevent a coolant from flowing in a space defined between the housing and the at least one outermost flow duct and filled with the at least one filler.

The at least one filler contacts both the housing and the at least one outermost flow duct and is tightly held between them and, therefore, there is a limited passage for the coolant, from the inlet port to the outlet port of the housing. The at least one filler has to cover the surface area of the wide side of the at least one outermost duct as much as possible. In particular, the at least one filler covers at least 70%, preferably at least 80% of the wide side of the at least one outermost flow duct on which the at least one filler is placed.

The at least one outermost flow duct is tightly associated by the at least one filler with an inner wall of the housing, what reduces the thermal expansion of the at least one outermost flow duct. This in turn reduces stresses at the junction between the headers and the at least one outermost flow duct and equalizes stresses in the housing and the at least one outermost flow duct. Hence, the fatigue strength of the at least one outermost flow duct, under the influence of violent changes of temperature, is increased. The risk of cracking at the junction between the header and the at least one outermost flow duct is greatly reduced and the heat exchanger assembly of the present invention can work for a bigger number of working cycles. The at least one filler is connected permanently to the housing and the at least one outermost flow duct, whereby the fatigue strength of the at least one flow duct can be increased even more.

### Brief description of the drawings

The present invention is presented, in a non-limiting example thereof, in the drawings, wherein:

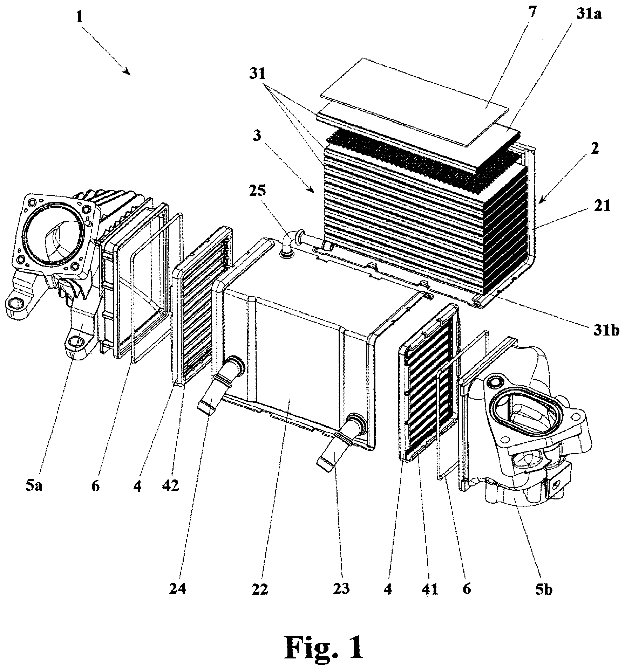

Fig. 1 shows a perspective exploded view of a heat exchanger assembly of the present invention,

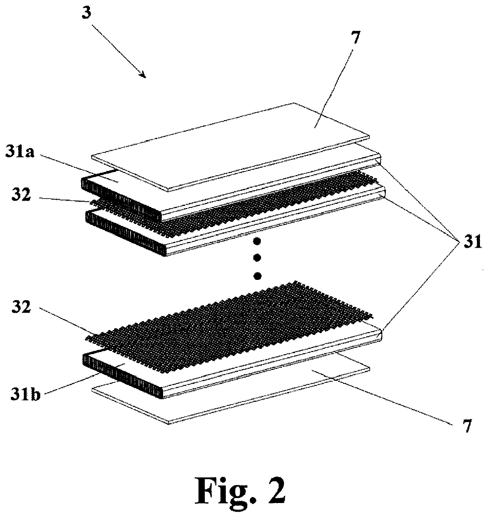

Fig. 2 shows a perspective exploded view of a core used in the heat exchanger assembly of the present invention, and
Fig. 3 shows a partial cut-away view of a detail of the heat exchanger assembly of the present invention.

### Embodiments of the invention

A heat exchanger assembly according to the present invention is indicated as a whole by numeral reference 1. The heat exchanger assembly 1 comprises a housing 2, which in the embodiment shown in the figures is made of two separate half-shells, i.e. a first half-shell 21 and a second half-shell 22. Of course, the housing 2 can consist of any appropriate number of shells and/or plates, e.g. three, four, etc. The housing 2 includes inlet and outlet ports 23, 24 for a coolant, in particular a cooling liquid, as well as a degassing port 25, which serves to remove the air that may be trapped in the coolant.

A core 3 is placed inside the housing 2. The core 3 includes a plurality of spaced-apart flat hollow flow ducts 31, i.e. there is some free space between two adjacent flow ducts 31 and the coolant flows through these free spaces. In the preferred embodiment of the present invention, the flow ducts are flow tubes, as represented in the figures. Flow ducts may be made of plates (not shown).

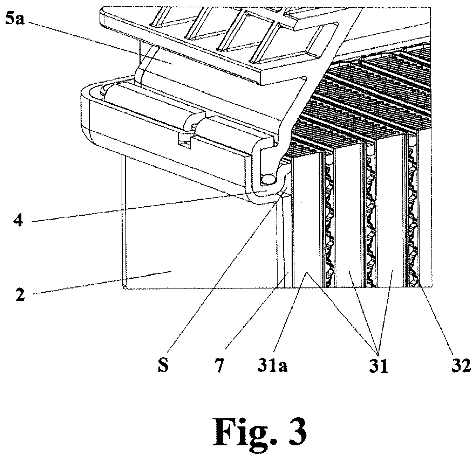

In the preferred embodiment of the invention, shown in the figures, especially in figure 3, the core 3 further includes a plurality of coolant turbulators 32 arranged between the flow ducts 31. Namely, one coolant turbulator 32 is situated between two adjacent flow ducts 31. The coolant turbulators 32 function to turn a laminar flow of the coolant into a turbulent one and, in turn, to increase the heat exchange efficiency. Of course, in other embodiments of the invention, the coolant turbulators 32 can be omitted, if necessary.

The flow ducts 31 are hollow and a medium to be cooled down, for example a fluid, such as a gas, flows there through. The flow ducts 31 have two wide sides, two narrow sides and two open ends. The flow ducts 31 are arranged with their wide sides parallel to each other. The flow ducts 31 can be provided internally with a series of air fins.

The heat exchanger assembly 1 further comprises two headers 4. The headers 4 are located on and connected to two opposite ends of the core 3, i.e. the ones presenting the open ends of the flow ducts 31. Moreover, each of the headers 4 is, on its entire perimeter, in fluid-tight contact with the housing 2. The header 4 comprises a plurality of through slots 42 so that the open ends of the flow ducts 31 fit into the slots 42. The number of the through slots 42 is equal to the number of the flow ducts 31 and the shape of the slots 42 corresponds to the shape of the cross-section of the open ends of the flow ducts 31.

Moreover, the heat exchanger assembly 1 comprises inlet and outlet conduits 5a, 5b for the medium to be cooled down. The inlet conduit 5a receives a hot medium from a motor vehicle and transfers it to the core 3 where it can be cooled down, whereas the outlet conduit 5b delivers a medium of a lower temperature to remaining parts of the motor vehicle. The inlet and outlet conduits 5a, 5b cover the headers 4 and close the housing 2. In other words, the inlet and outlet conduits 5a, 5b close two openings in the housing 2, which are intended for the flow of the medium to be cooled down, and make the housing 2 complete. In fact, the inlet and outlet conduits 5a, 5b are part of the housing 2 itself. A seal 6 may be placed between each of the headers 4 and each of the inlet and outlet conduits 5a, 5b. It should be noted that the headers 4 comprise a plurality of teeth 41, which are bended over protruding parts of the inlet and outlet conduits 5a, 5b in order to make the assembly even more rigid and resistant.

All components of the heat exchanger assembly 1 mentioned above, except for the seal 6, can be made of materials suitable for brazing, for example aluminum, steel and their alloys. In order to obtain the proper fluid-tightness of the assembly all components thereof are connected to each other by brazing.

The heat exchanger assembly 1 also comprises at least one filler 7 arranged between an inner wall of the housing 2 and at least one outermost flow duct 31a, 31b of the core 3. In a preferred embodiment of the invention the heat exchanger assembly 1 comprises two fillers 7 - each filler 7 is arranged between the housing 2 and each of two outermost flow ducts 31a, 31b. Each filler 7 is in sealed contact with the inner wall of the housing 2 and the wide side of one of two outermost flow ducts 31a, 31b of the core 3. In other words, the fillers 7 fill a space between the housing 2 and the outermost flow ducts 31a, 31b of the core 3 and are strongly and tightly held between the inner wall of the housing 2 and the outermost flow ducts 31a, 31b of the core 3, i.e. there is no clearance between the housing 2, the fillers 7 and the outermost flow ducts 31, 31b.

The fillers 7 cover at least 70%, preferably at least 80 % of the surface area of the wide sides of the outermost flow ducts, which they are in contact with and/or placed on.

Additionally, if the fillers 7 do not cover the whole surface area of the outermost flow ducts 31a, 31b, the heat exchanger assembly 1 comprises a coolant channel or free space S between the header 4, the outermost flow duct 31a, 31b and the filler 7 and the coolant is able to flow through this free space S. The free space S can be present adjacent to each end of each filler 7 used. It in turn means that if two fillers 7 are employed there are four free spaces 7.

In one preferred embodiment of the present invention the fillers 7 can be in the form of a plate. The plate can be solid. Nevertheless, the plate can also be provided with undercuts, openings or edges with special shapes, if desired.

In other embodiments of the present invention the fillers 7 can be made of a grid, a honeycomb structure or any other structured component. In any case it should be noted that it is important to orientate the fillers 7 within the heat exchanger assembly 1 in such a way that the flow of the coolant from the inlet port 24 to the outlet port 25 of the housing 2 and through a space defined between the housing 2 and the outermost flow ducts 31a, 31b, i.e. the precise space filled with and occupied by the fillers 7, is prevented and the fillers 7 are tightly held between surrounding components of the assembly. In other words, the coolant cannot flow through the fillers 7 themselves.

Preferably, the fillers 7 are made of materials suitable for brazing, for example aluminum and its alloys. Therefore, the fillers 7 can be permanently connected to the housing 2 and the wide sides of the outermost flow ducts 31a, 31b by brazing. However, in other embodiments of the present invention another methods of connection can be employed. For example, the fillers 7 can be glued to the surrounding components of the heat exchanger assembly 1 or even the fillers 7 can be simply held tightly between the housing and the outermost flow ducts 31a, 31b, as stated above, so that any relative movement between these parts is prevented and the housing 2, the fillers 7 and the outermost flow ducts 31a, 31b are tightly associated with each other. In this way, the fillers 7 can be made of materials other than those suitable for brazing, for example plastic materials.

The fillers 7 can be made by any suitable manufacturing process, e.g. stamping, machining, casting or injection. As stated above, the appropriate materials for the fillers 7 include a full range of materials, such as aluminum, steel, their alloys, ferric materials, composites or plastics materials.

The fillers 7 rigidly connect the outermost flow ducts 31a, 31b to the housing 2 to equalize the stress level between the outermost flow ducts 31a, 31b and the housing 2.

When assembling the heat exchanger assembly 1 of the present invention minimal gaps between the fillers 7 and the housing 2 and/or the outermost flow ducts 31a, 31b may be required to have no collision of the fillers 7 with surrounding components. Therefore, these gaps may result in limited passages for the coolant.

The aim to prevent a differential thermal expansion between the housing 2 and the outermost flow ducts 31a, 31b is achieved by the fillers 7 of the present invention.

## Claims

1. A water charge air cooler (1), comprising:
a housing (2); and
a core (3) situated inside said housing (2), said core (3) comprising a plurality of flow ducts (31), said flow ducts (31) each comprising two wide sides, said flow ducts (31) including two outermost flow ducts (31a, 31b) ;
**characterized in that** it further comprises at least one filler (7) placed between and being in sealed contact with said housing (2) and said wide side of at least one outermost flow duct (31a, 31b) so that said at least one filler (7) covers at least 70% of said wide side of said at least one outermost flow duct (31a, 31b), which is in contact with said at least one filler (7), said at least one filler (7) being able to prevent a coolant from flowing in a space defined between said housing (2) and said at least one outermost flow duct (31a, 31b) and filled with said at least one filler (7).

2. The water charge air cooler (1) according to claim 1, **characterized in that** said at least one filler (7) is chosen from the group including a solid plate, a grid and a honeycomb structure.

3. The water charge air cooler (1) according to any one of the preceding claims, **characterized in that** said at least one filler (7) is held tightly between said housing (2) and said at least one outermost flow duct (31a, 31b).

4. The water charge air cooler (1) according to any one of the preceding claims, **characterized in that** said at least one filler (7) is made of one or more plastic materials.

5. The water charge air cooler (1) according to any one of claims 1 to 3, **characterized in that** said at least one filler (7) is made of one or more materials suitable for brazing.

6. The water charge air cooler (1) according to any one of claims 1 or 2 or 3 or 5, **characterized in that** said at least one filler (7) is made of aluminum.

7. The water charge air cooler (1) according to any one of the preceding claims, **characterized in that** said at least one filler (7) is connected to said housing (2) and said at least one outermost flow duct (31a, 31b) by gluing.

8. The water charge air cooler (1) according to any one of claims 5 or 6, **characterized in that** said at least one filler (7) is connected to said housing (2) and said at least one outermost flow duct (31a, 31b) by brazing.

9. The water charge air cooler (1) according to any one of the preceding claims, **characterized in that** said core (3) further comprises a plurality of coolant turbulators (32), each coolant turbulator (32) being arranged between two adjacent flow ducts (31).

10. The water charge air cooler (1) according to any one of the preceding claims, **characterized in that** said flow ducts are flow tubes and that said water charge air cooler (1) further comprises two headers (4) having a plurality of slots (42), the number of which is equal to the number of said flow ducts (31) of said core (3), the shape of said slots (42) corresponding to the shape of the cross-section of said flow ducts (31).

11. The water charge air cooler (1) according to any one of the preceding claims, **characterized in that** it further comprises inlet and outlet conduits (5a, 5b) and two headers (4) placed on opposite ends of said core (3) and comprising a plurality of teeth (41), which are bent over said inlet and outlet conduits (5a, 5b).

12. The water charge air cooler (1) according to any one of the preceding claims, **characterized in that** it further comprises a free space (S) defined between said headers (4), said at least one outermost flow duct (31a, 31b) and said at least one filler (7) through which a coolant is able to flow.

13. The water charge air cooler (1) according to any one of the preceding claims, **characterized in that** said at least one filler (7) covers at least 80% of said wide side of said at least one outermost flow duct (31a, 31b) .

14. The water charge air cooler (1) according to any one of the preceding claims, **characterized in that** it comprises two fillers (7), said fillers (7) each being placed between and being in sealed contact with said housing (2) and said wide side of one of two outermost flow ducts (31a, 31b).

## Patentansprüche

1. Wasserladeluftkühler (1), umfassend:
ein Gehäuse (2); und
einen Kern (3), der innerhalb des Gehäuses (2) angeordnet ist, wobei der Kern (3) eine Vielzahl von Strömungskanälen (31) aufweist, wobei die Strömungskanäle (31) jeweils zwei breite Seiten aufweisen, wobei die Strömungskanäle (31) zwei äußerste Strömungskanäle (31a, 31b) enthalten;
**dadurch gekennzeichnet, dass** er ferner mindestens einen Füller (7) umfasst, der zwischen dem Gehäuse (2) und der breiten Seite mindestens eines äußersten Strömungskanals (31a, 31b) angeordnet ist und in abgedichtetem Kontakt mit diesem steht, sodass der mindestens eine Füller (7) mindestens 70% der breiten Seite des mindestens einen äußersten Strömungskanals (31a, 31b) bedeckt, der in Kontakt mit dem mindestens einen Füller (7) steht, wobei der mindestens eine Füller (7) in der Lage ist, zu verhindern, dass ein Kühlmittel in einem Raum fließt, der zwischen dem Gehäuse (2) und dem mindestens einen äußersten Strömungskanal (31a, 31b) definiert und mit dem mindestens einen Füller (7) gefüllt ist.

2. Wasserladeluftkühler (1) gemäß Anspruch 1, **dadurch gekennzeichnet, dass** der mindestens eine Füller (7) aus der Gruppe ausgewählt ist, die eine massive Platte, ein Gitter und eine Wabenstruktur enthält.

3. Wasserladeluftkühler (1) gemäß einem der vorhergehenden Ansprüche, **dadurch gekennzeichnet, dass** der mindestens eine Füller (7) fest zwischen dem Gehäuse (2) und der mindestens einen äußersten Strömungskanal (31a, 31b) gehalten wird.

4. Wasserladeluftkühler (1) gemäß einem der vorhergehenden Ansprüche, **dadurch gekennzeichnet, dass** der mindestens eine Füller (7) aus einem oder mehreren Kunststoffmaterialien hergestellt ist.

5. Wasserladeluftkühler (1) gemäß einem der Ansprüche 1 bis 3, **dadurch gekennzeichnet, dass** der mindestens eine Füller (7) aus einem oder mehreren zum Hartlöten geeigneten Materialien hergestellt ist.

6. Wasserladeluftkühler (1) gemäß einem der Ansprüche 1 oder 2 oder 3 oder 5, **dadurch gekennzeichnet, dass** der mindestens eine Füller (7) aus Aluminium hergestellt ist.

7. Wasserladeluftkühler (1) gemäß einem der vorhergehenden Ansprüche, **dadurch gekennzeichnet, dass** der mindestens eine Füller (7) mit dem Gehäuse (2) und dem mindestens einen äußersten Strömungskanal (31a, 31b) durch Kleben verbunden ist.

8. Wasserladeluftkühler (1) gemäß einem der Ansprüche 5 oder 6, **dadurch gekennzeichnet, dass** der mindestens eine Füller (7) mit dem Gehäuse (2) und dem mindestens einen äußersten Strömungskanal (31a, 31b) durch Hartlöten verbunden ist.

9. Wasserladeluftkühler (1) gemäß einem der vorhergehenden Ansprüche, **dadurch gekennzeichnet, dass** der Kern (3) ferner eine Vielzahl von Kühlmittelturbulatoren (32) umfasst, wobei jeder Kühlmittelturbulator (32) zwischen zwei angrenzenden Strömungskanälen (31) angeordnet ist.

10. Wasserladeluftkühler (1) gemäß einem der vorhergehenden Ansprüche, **dadurch gekennzeichnet, dass** die Strömungskanäle Strömungsrohre sind und dass der Wasserladeluftkühler (1) ferner zwei Sammler (4) umfasst, die eine Vielzahl von Schlitzen (42) aufweisen, deren Anzahl gleich der Anzahl der Strömungskanäle (31) des Kerns (3) ist, wobei die Form der Schlitze (42) der Form des Querschnitts der Strömungskanäle (31) entspricht.

11. Wasserladeluftkühler (1) gemäß einem der vorhergehenden Ansprüche, **dadurch gekennzeichnet, dass** er ferner Einlass- und Auslasskanäle (5a, 5b) und zwei Sammler (4) umfasst, die an gegenüberliegenden Enden des Kerns (3) angeordnet sind und eine Vielzahl von Zähnen (41) aufweisen, die über die Einlass- und Auslasskanäle (5a, 5b) gebogen sind.

12. Wasserladeluftkühler (1) gemäß einem der vorhergehenden Ansprüche, **dadurch gekennzeichnet, dass** er ferner einen freien Raum (S) umfasst, der zwischen den Sammlern (4), dem mindestens einen äußersten Strömungskanal (31a, 31b) und dem mindestens einen Füller (7) definiert ist, durch den ein Kühlmittel fließen kann.

13. Wasserladeluftkühler (1) gemäß einem der vorhergehenden Ansprüche, **dadurch gekennzeichnet, dass** der mindestens eine Füller (7) mindestens 80% der breiten Seite des mindestens einen äußersten Strömungskanals (31a, 31b) abdeckt.

14. Wasserladeluftkühler (1) gemäß einem der vorhergehenden Ansprüche, **dadurch gekennzeichnet, dass** er zwei Füller (7) umfasst, wobei die Füller (7) jeweils zwischen dem Gehäuse (2) und der breiten Seite eines der zwei äußersten Strömungskanäle (31a, 31b) angeordnet sind und in abgedichtetem Kontakt mit diesem stehen.

## Revendications

1. Refroidisseur d'air de suralimentation à eau (1), comprenant :
un carter (2) ; et
un noyau (3) situé à l'intérieur dudit carter (2), ledit noyau (3) comprenant une pluralité de conduits d'écoulement (31), lesdits conduits d'écoulement (31) comprenant chacun deux côtés larges, lesdits conduits d'écoulement (31) comprenant deux conduits d'écoulement les plus à l'extérieur (31a, 31b) ;
**caractérisé en ce qu'**il comprend en outre au moins un agent de remplissage (7) placé entre et en contact étanche avec ledit carter (2) et ledit côté large d'au moins un conduit d'écoulement le plus à l'extérieur (31a, 31b) de sorte que ledit au moins un agent de remplissage (7) couvre au moins 70 % dudit côté large dudit au moins un conduit d'écoulement le plus à l'extérieur (31a, 31b), qui est en contact avec ledit au moins un agent de remplissage (7), ledit au moins un agent de remplissage (7) pouvant empêcher un fluide de refroidissement de s'écouler dans un espace défini entre ledit carter (2) et ledit au moins un conduit d'écoulement le plus à l'extérieur (31a, 31b) et rempli avec ledit au moins un agent de remplissage (7).

2. Refroidisseur d'air de suralimentation à eau (1) selon la revendication 1, **caractérisé en ce que** ledit au moins un agent de remplissage (7) est choisi dans le groupe comprenant une plaque solide, une grille et une structure en nid d'abeille.

3. Refroidisseur d'air de suralimentation à eau (1) selon l'une quelconque des revendications précédentes, **caractérisé en ce que** ledit au moins un agent de remplissage (7) est maintenu de manière étanche entre ledit carter (2) et ledit au moins un conduit d'écoulement le plus à l'extérieur (31a, 31b).

4. Refroidisseur d'air de suralimentation à eau (1) selon l'une quelconque des revendications précédentes, **caractérisé en ce que** ledit au moins un agent de remplissage (7) est constitué d'au moins une matière plastique.

5. Refroidisseur d'air de suralimentation à eau (1) selon l'une quelconque des revendications 1 à 3, **caractérisé en ce que** ledit au moins un agent de remplissage (7) est constitué d'au moins un matériau approprié pour le brasage.

6. Refroidisseur d'air de suralimentation à eau (1) selon l'une quelconque des revendications 1, 2, 3 et 5, **caractérisé en ce que** ledit au moins un agent de remplissage (7) est constitué d'aluminium.

7. Refroidisseur d'air de suralimentation à eau (1) selon l'une quelconque des revendications précédentes, **caractérisé en ce que** ledit au moins un agent de remplissage (7) est relié audit carter (2) et audit au moins un conduit d'écoulement le plus à l'extérieur (31a, 31b) par collage.

8. Refroidisseur d'air de suralimentation à eau (1) selon l'une quelconque des revendications 5 et 6, **caractérisé en ce que** ledit au moins un agent de remplissage (7) est relié audit carter (2) et audit au moins un conduit d'écoulement le plus à l'extérieur (31a, 31b) par brasage.

9. Refroidisseur d'air de suralimentation à eau (1) selon l'une quelconque des revendications précédentes, **caractérisé en ce que** ledit noyau (3) comprend en outre une pluralité de turbulateurs de refroidissement (32), chaque turbulateur de refroidissement (32) étant disposé entre deux conduits d'écoulement (31) adjacents.

10. Refroidisseur d'air de suralimentation à eau (1) selon l'une quelconque des revendications précédentes, **caractérisé en ce que** lesdits conduits d'écoulement sont des conduits d'écoulement et **en ce que** ledit refroidisseur d'air de suralimentation à eau (1) comprend en outre deux collecteurs (4) ayant une pluralité de fentes (42), dont le nombre est égal au nombre desdits conduits d'écoulement (31) dudit noyau (3), la forme desdites fentes (42) correspondant à la forme de la section transversale desdits conduits d'écoulement (31).

11. Refroidisseur d'air de suralimentation à eau (1) selon l'une quelconque des revendications précédentes, **caractérisé en ce qu'**il comprend en outre des conduits d'entrée et de sortie (5a, 5b) et deux collecteurs (4) placés sur les extrémités opposées dudit noyau (3) et comprenant une pluralité de dents (41), qui sont pliées sur lesdits conduits d'entrée et de sortie (5a, 5b).

12. Refroidisseur d'air de suralimentation à eau (1) selon l'une quelconque des revendications précédentes, **caractérisé en ce qu'**il comprend en outre un espace libre (S) défini entre lesdits collecteurs (4), ledit au moins un conduit d'écoulement le plus à l'extérieur (31a, 31b) et ledit au moins un agent de remplissage (7) à travers lequel un fluide de refroidissement peut s'écouler.

13. Refroidisseur d'air de suralimentation à eau (1) selon l'une quelconque des revendications précédentes, **caractérisé en ce que** ledit au moins un agent de remplissage (7) couvre au moins 80 % dudit côté large dudit au moins un conduit d'écoulement le plus à l'extérieur (31a, 31b).

14. Refroidisseur d'air de suralimentation à eau (1) selon l'une quelconque des revendications précédentes, **caractérisé en ce qu'**il comprend deux agents de remplissage (7), lesdits agents de remplissage (7) étant chacun placés entre et étant en contact étanche avec ledit carter (2) et ledit côté large de l'un des deux conduits d'écoulement les plus à l'extérieur (31a, 31b).
